# EUROPEAN PATENT SPECIFICATION

(11) **EP 1 374 667 B1**
(45) Date of publication and mention of the grant of the patent: **04.04.2007**
(21) Application number: 03013602.2
(22) Date of filing: 16.06.2003
(51) Int. Cl.: A01G 9/16, A01G 9/14

(54) **Small-sized greenhouse with controlled internal environment**
Gewächshaus kleinerer Baugrösse mit einer kontrollierten internen Umgebung
Serre de dimensions réduites avec un environnement interne regulé

(30) Priority: 18.06.2002 IT MI20021347
(43) Date of publication of application: 02.01.2004
(73) Proprietor: SMEG S.p.A., 42016 Guastalla, RE (IT)
(72) Inventor: Bertazzoni, Roberto, 42016 Guastalla (RE) (IT)
(74) Representative: Faraggiana, Vittorio

(56) References cited:
- EP-A- 0 525 231
- FR-A- 1 272 260
- GB-A- 588 800
- GB-A- 984 404
- US-A- 1 942 477
- US-A- 2 019 407

## Description

The present invention herein describes an innovative small-sized greenhouse, suitable for example for being placed on a piece of furniture or hung or held up, especially for "domestic" or internal spaces.

In the known technique small-sized greenhouses are known, usually proposed for use on balconies or similar places, and which are made up simply of a rigid framework with transparent walls. As the small greenhouses for "domestic" use do not offer other than a passive protection from the cold, they can only be used for protecting plants in the open air during the winter season. The user must then regularly check that the internal environment maintains acceptable conditions for the survival of the plants contained therein.

Besides passive protection from the cold, the small greenhouses known do not provide any other protection from external conditions that are just as detrimental for a plant. For example, the known greenhouses for "domestic" use are actually totally ineffective for protecting the plants from the internal environment of a building, often very unfavorable to growth (think of the low illumination, low humidity, etc.) and which often are an obstacle to those who wish to position plants in internal spaces.

FR 1 272 260 and EP-A-0525231 disclose small-sized greenhouses provided with means for controlling humidity of the internal environment. However, in general, diffusion of the humidity inside the chamber for plants cannot be considered satisfactory.

The main purpose of the present invention is to avoid the above-mentioned inconveniences by providing a small-sized greenhouse, for example suitable for being hung or placed on a piece of furniture or held up, by which a controlled internal environment can be obtained which is suitable for the growth of the plants, even with wide variability of the ambient conditions outside the greenhouse and with the least effort and control of the user.

In view of this purpose it was devised to produce, according to the invention, a small-sized greenhouse having the features recited in claim 1.

To clarify the explanation of the innovative principles of the present invention and its advantages in comparison to the known technique, hereinafter follows a description, with the help of enclosed drawings, of an example of a possible embodiment thereof applying said principles. In the drawings:
- Figure 1 represents a view in schematic prospective of a greenhouse, in partially open condition;
- Figure 2 represents a view of the greenhouse in Figure 1 in a condition of partial assembly;
- Figure 3 represents a view similar to that in Figure 1, but with the greenhouse in a closed condition;
- Figure 4 represents a block diagram of the climatic control device of the greenhouse;
- Figure 5 represents a view similar to that in Figure 1, but representing a greenhouse according to the invention;
- Figure 6 represents a partial, schematic view, of the greenhouse in Figure 5.

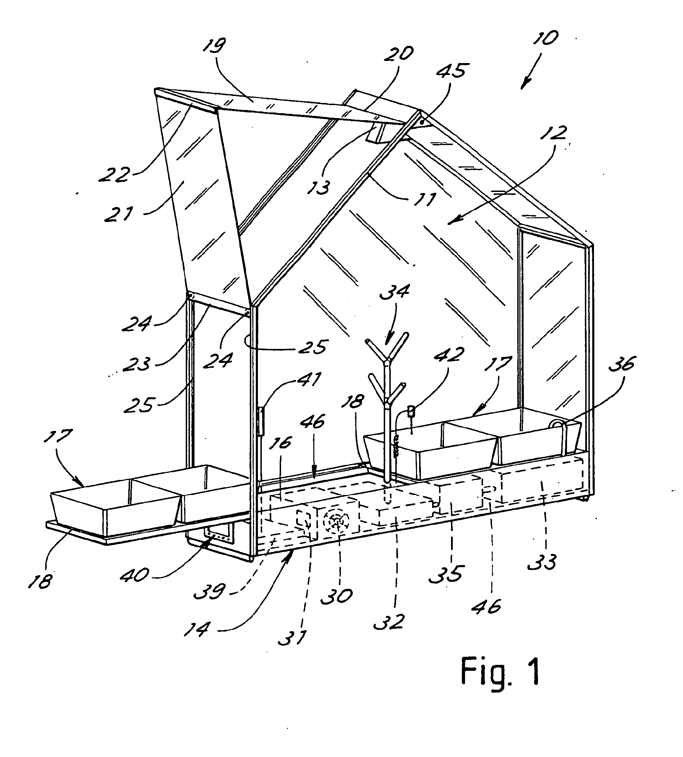

With reference to the figures, Figure 1 shows a small-sized greenhouse, indicated generically with 10, for domestic use (suitable for being placed for example on a piece of furniture or hung or held up) which is made up of a framework 11 (for example in metal section) closed by transparent walls to make a "windowed" chamber 12 to house the plants. The panels that make up the transparent walls can be of any suitable material, such as glass or plastic.

As can be seen in the figures, in the embodiment shown, an advantageous "house" shape has been adopted, with its depth squashed. The illumination lamp 13 has been advantageously positioned in the peak of the roof with its projected light beam kept inside the greenhouse. This lamp can be advantageously made with white light high efficiency LED, to keep low the heat produced in the chamber.

In the part of the framework corresponding to the peak of the roof a reinforcement 45 is inserted by which the greenhouse can be hung up.

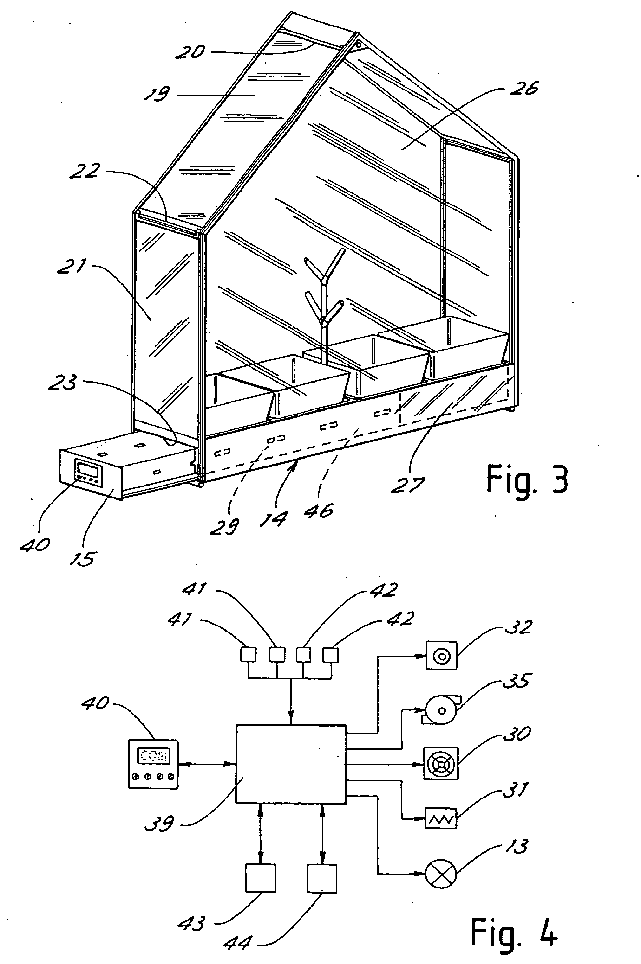

The bottom 14 of the greenhouse is box-shaped to contain devices for the control of ambient parameters inside the chamber 12. Advantageously, as shown in Figure 3, the box can be at least partially in the shape of a drawer 15 extractable from one side of the greenhouse, so as to facilitate access to the internal devices.

The top of the box forms the bottom 16 for containers and pots 17 for the plants, which can be advantageously positioned on extractable trays 18.

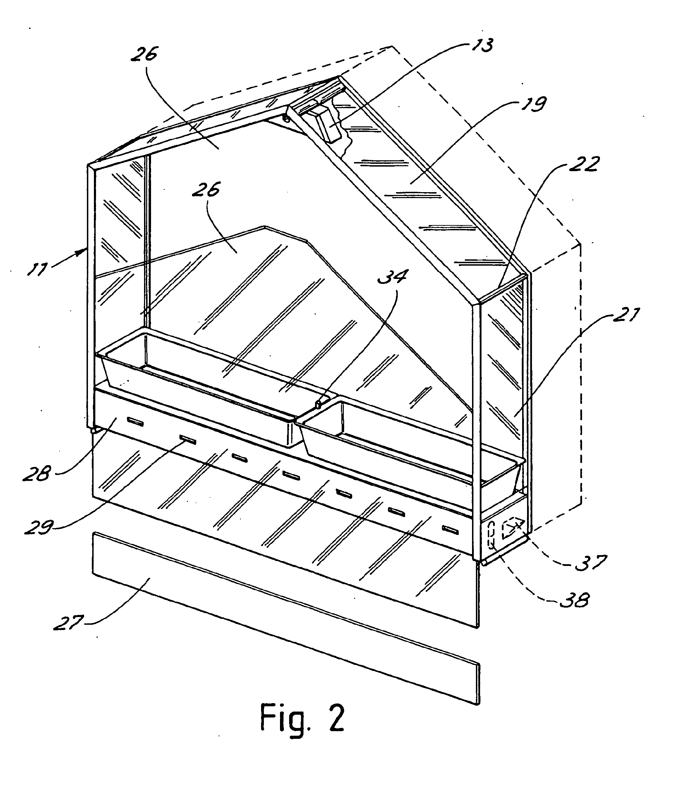

For the access to the chamber of the greenhouse it has been found advantageous to hinge the side panels that can then be opened. In particular, the side panels on at least one of the two minor sides of the greenhouse comprise a first panel 19 which is positioned along the slanting part of the roof of the greenhouse and which is hinged above in 20 to the structure of the greenhouse, according to a first horizontal hinging axis. A second panel 21 is positioned along the vertical part of the side of the greenhouse and has its upper edge hinged in 22 to the lower edge of the first panel 19 according to a second axis parallel to the first hinging axis. The lower edge 23 of the panel 21 is fitted with means 24 (for example runners or rollers) for restricting the vertical sliding along rails 25 inserted in the framework that form the vertical part of the side of the greenhouse. In this manner, the opening and closing of the side part of the greenhouse comes about with a vertical movement of the panels, as can be seen from the comparison of Figures 1 and 2. The trays with the pots can easily pass through the opening freed of the lower panel. Naturally, as a technician can easily imagine, it is preferable for both sides of the greenhouse to have the above-described opening system.

It is however also preferable for at least one of the two front or rear walls 26 to be removable for when it is necessary to have greater access.

As can be seen well in Figure 2, the transparent panel 26 is made sliding in the side uprights of the frame 11 so that it can be pulled out from below. Advantageously, to keep the transparent panel in its place a small panel or lower locking strip 27 can be provided, that can be suitably clipped on and off.

The panels 27 on the opposite sides of the box 14 individuate, in front of the side wall 28 of the box, an interspace 46 in communication with the inside of the chamber 12 (and, if necessary, the outside). Ventilation slots 29 are opened in the wall 28 of the box. The re-circulation means can withdraw from the interspace present on one side of the greenhouse and let into the interspace on the other side of the greenhouse. Flow deflectors (not shown) can be provided, for a uniform distribution of the flow in the chamber.

Returning to Figure 1, as can be seen schematically from the dotted line, contained in the box 14, among the various devices, there are also forced chamber air re-circulation means 30. These means comprise advantageously at least one fan sized so as to permit adequate re-circulation of the air, thus ensuring, through the slots 29, that when necessary, the air in the chamber is changed.

Electric heating means 31 (for example electric wire resistances or of the fine film type, also in the shape of mats) can be present for raising the temperature in the greenhouse. These heating means can be advantageously associated to air circulation means to produce a circulation of heated air when necessary. In this manner you can deal with a wide variation of external temperature. Among the ambient control devices present in the box 14, there are also advantageously means for the input of humidity into the chamber 12 so as to be able to maintain a desired humidity in the atmosphere in the chamber. The means for the input of humidity in the chamber comprise a humidifying device 32 that draws water from a tank of water 33 and, through one or more nozzles 34 present in the chamber 12, sprays nebulized water into the chamber. Advantageously, for extremely low noise, the humidifying device can be a known ultra-sound nebulizer.

The vapour input openings into the chamber can be made either near the bottom or the sides of the chamber (as for example shown in Figure 2) or be placed at the extremity of a rigid conduit (also branching) that leads towards the centre of the chamber (as shown in Figure 1).

Besides the nebulization system, irrigation means 35 can also be provided, which withdraw the water from the tank 33 and distribute it according to what is needed in the pots through a distribution plant 36 (of which, for simplicity, only one adduction tube is shown in Figure 1). The irrigation means can be either the pump type or a known type that functions by capillarity. The distribution can come about either by direct input into the soil through special tubes (as can be seen in Figure 1) or by special "sweating" mats (not shown) placed on the bottom of the chamber 12 and on which the pots are positioned (porous and/or suitably holed).

A special filling opening 37 can be provided on one wall of the box to top up the tank. Level indicator means 38 can also be provided.

In the case of the extractable drawer 15, known means (not shown) of automatic connection between the parts of the water circuit contained in the drawer and the corresponding parts of the fixed water circuit in the chamber can also be provided, so as to enable easy and rapid opening and closing of the drawer.

The greenhouse according to the invention comprises electronic control devices that command the various devices for irrigation, humidification, illumination, ventilation, etc. used for maintaining the ambient conditions in the greenhouse within preset intervals. These electronic devices interact with the user by means of a command and display panel 40.

Figure 4 shows schematically the climatic control system. The electronic control system is known in itself and, on the basis of the description made here, can be easily imagined by an expert technician.

Advantageously, the electronic command devices are grouped together in one single device or central electronic unit 39, for example of the microprocessor type suitably programmed.

The central unit (of the single devices) is equipped with known sensors 41, positioned in number and position suitable for detecting the conditions inside the greenhouse.

The sensors can advantageously comprise at least an ambient humidity sensor, a temperature sensor and a light sensor. A soil humidity sensor 42 can also be provided, for example to stick into the soil.

The devices for heating, ventilation, nebulization and irrigation and the lamp can thus be feedback driven by the control device to maintain the corresponding parameters in the inside of the greenhouse within preset values. In this manner, the temperature control device in the chamber, based on the temperature from the special temperature sensor, will command the heating means and/or the ventilation means, while the air humidity sensors will activate the nebulizer and the soil humidity sensor will activate the irrigation at the detection of soil humidity that is lower than a preset value.

The data detected by the sensors can also be shown on the command panel display.

The electronic central unit is also equipped with a known clock device 43 so that the various devices can also be commanded in function of the time of the day and/or of the passing of time. In this manner both day/night cycles (for example in turning the lamp on and off), and timed operations at intervals or for preset periods of time can be observed (for example, nebulization of water for a preset duration).

The combination of light and clock sensor enables the plants to be supplied with the correct number of hours of light per day at the right luminosity, turning the light off when it is not necessary and maintaining the luminosity in the chamber above a preset value for at least one preset time interval during a day.

The value intervals to observe for the various sizes controlled are memorized in a memory 44 of the central unit to be compared with the values detected by the sensors. The intervals memorized can also be varied manually by adjusting the command panel 40 according to necessity.

Climatic programs are memorized to make the use of the greenhouse easier, (and/or can be memorized by means of command from the panel) in the memory 44. Each program defines different ambient parameters or the courses of ambient parameters to keep inside the greenhouse. The command panel 40 enables one of the preset climatic programs available to be selected as desired and the control device 39 commands the said devices for controlling ambient parameters inside the chamber to follow what is programmed by the pre-selected climatic program.

The command panel, besides giving the possibility to read the current parameters in the greenhouse, set others and select programmed cycles, can also give warning of malfunctioning or of interventions to carry out (for example, filling the water tank ).

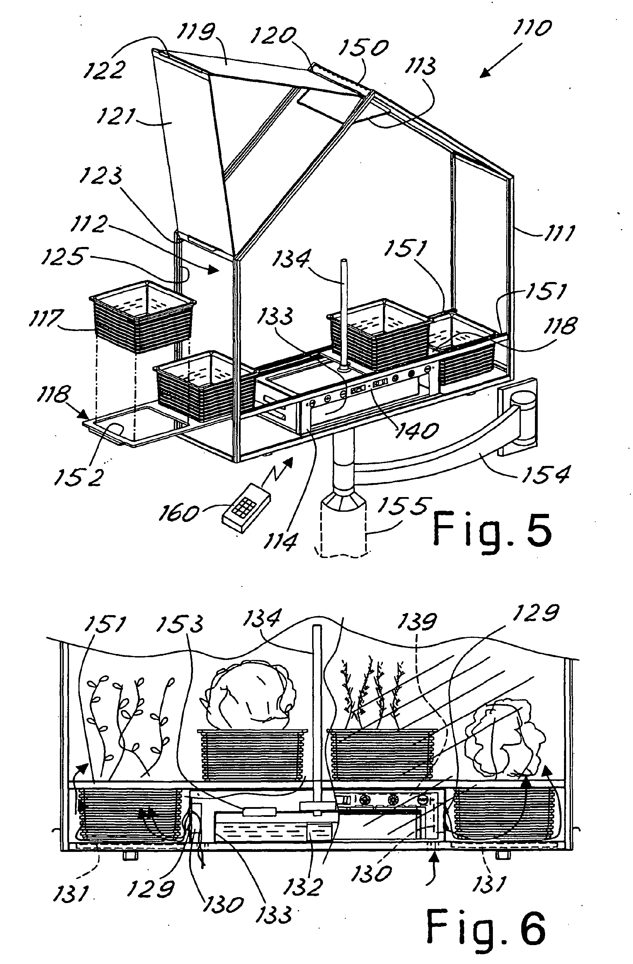

Figure 5 shows a greenhouse according to the invention. For convenience, similar parts to those of the previous embodiment will be indicated with the same numeration increased by one hundred.

There is therefore a greenhouse 110, with its external shape similar to that already described, which is made up of a framework 111 (for example in steel section) closed by transparent walls to make a "windowed" chamber 112.

In the peak of the roof there is an illumination group 113, advantageously made up of a high power LED spotlight, with light beam directed onto the pot plants. An aeration hole 150 can be provided for the output of the hot air from the peak.

A system of side panels 119, 121 is provided for access to the chamber of the greenhouse, "wing" hinged in 120, 122, as already described above. The lower edge 123 of the panel 121 is fitted with runners or rollers for restricting the vertical sliding along rails 125. Figure 5 shows only the left side open, but also the right side can be opened with the same mechanism.

The bottom 114 of the greenhouse is made partially box-shape to contain in a central zone devices for controlling the ambient parameters inside the chamber 112.

Pots or containers 117 are positioned above and at the sides of the box 114. Advantageously, a couple of guides 151 extends from one side to the other of the greenhouse to house and guide two extractable trays 118. The trays can be extracted through the wing opening on the two sides of the greenhouse.

Each tray has a more internal area on which the bottom of a pot 117 is placed and a more external area with a perforated housing 152 from which a second pot 117 is hung, so as to have a step layout of the pots. Advantageously, the more external pots do not touch the bottom of the greenhouse.

The box 114 has a front 140 on which the displays of the internal parameters of the greenhouse and the command pushbuttons are positioned. Advantageously, the pushbuttons are the capacitive type, so as to be activated through the glass front of the greenhouse. An infrared remote controlled command system 160 can also be provided.

As can be seen well in Figure 6, in the box-shape bottom 114, in addition to the electronic controls 139 as already described, a container of water 133 is positioned in which a known ultrasound vaporizer 132 is immersed. A vertical conduit 134 stands up from the upper wall of the container and has its upper extremity open in a central position of the chamber of the greenhouse. In the top of the container there is also a fan 153 for the force intake of air into the container itself to create overpressure above the free surface of the water. In this manner, while it is functioning, the electronic control device activates the ultra-sound vaporizer for several seconds, so as to produce vapour that accumulates in the upper part of the container, and then briefly activated the fan to produce overpressure that expels the vapour through the conduit in a short puff. This enables a satisfying quantity of vapour to be directed towards the lamps 113 for every emission. In this manner we obtain both an excellent diffusion of vapour and a pleasant visual effect. The puffs can be advantageously repeated at intervals, for example every few seconds. The container of water can be filled through an opening that can be found by moving one of the trays towards the outside.

As can be seen in the figures, the front wall of the box 114 can have an opening through which can be seen the container of water, made semitransparent and, possibly, weakly illuminated. This enables the level of the water to be seen quickly and also an advantageous function of night-light.

Two fans 130 are present on the side walls of the box 114 that suck in air from outside through passages in the bottom of the box and they release it into the greenhouse through slots 129 that are shaped to facilitate a distributed circulation of air, around the pot and from the bottom of the greenhouse upwards, as schematically shown by the arrows.

Under the two side pots in the bottom of the greenhouse can be advantageously provided two heating elements 131, to heat the flow of air if necessary. The position of the heating elements 131, directly under the side pots, makes the side pots particularly suitable for the germination of cuttings or similar. The greenhouse 110 can naturally also comprise the other control and irrigation means described for the previous embodiment.

At this point it is clear how the preset aims are reached, providing a small-sized greenhouse that enables an ambient condition desired to be maintained inside it independently from the external conditions. With a greenhouse made in this manner plants can be kept in an internal space, for example an apartment, that otherwise could not survive adequately in that space. The need for intervention by man is also reduced to a minimum and, at the most, can be limited for long periods of time to a simple topping up of the tank of water. All this, with limited overall dimensions and excellent use of the internal volume and the glassed surfaces. A greenhouse according to the invention can, for example, be contained in a dimension with base 80X20cm and height 80cm. Removing the larger walls, more greenhouses can be interconnected in series putting the respective openings obtained side by side, so as to form spaces of greater volume, as schematically shown with the dotted line in Figure 2. For correct functioning the greenhouse needs only a simple connection to a source of electricity, as any common electrical house appliance.

Naturally, the description made above of an embodiment applying the innovative principles of the present invention is given as an example of said innovative principles and therefore must not be taken as limiting in the sphere of exclusive rights claimed herein. For example, the appearance of the greenhouse can be different from how it is shown, according to the specific needs or desires. As shown for the embodiment in Figure 5, as well as being hung from above or placed on a piece of furniture, the greenhouse can be supported by a special jointed arm 154, fixed to a wall, or by an upright or pedestal 155.

## Claims

1. Small-sized greenhouse made up of a chamber (12, 112) for plants having a bottom which is made, at least partially, of a box (14, 114) containing devices for controlling the ambient parameters inside the chamber, said devices comprising means for humidifying the atmosphere in the chamber, **characterized in that** said humidifying means comprise an ultrasound nebulizer (132) immersed in a container of water (133), a far (153) being arranged in the top of said container (133) to generate on command an overpressure in the container, with the top being connected to the inside of the chamber (12, 112) for plants through a conduit (134), a control device (139) being further present in the greenhouse to activate at intervals and in sequence the nebulizer (132) and said far (153) generating overpressure, so as to produce a puff of vapour in the chamber through the conduit (134).

2. Greenhouse according to claim 1, **characterized in that** the said devices for controlling the ambient parameters inside the chamber further comprise forced circulation means (30, 130) of the air in the chamber, heating means (31, 131) and lamp control means (13) for illuminating the inside of the chamber.

3. Greenhouse according to claim 1, **characterized in that** the humidifying means are means (32, 132) for forced input of humidity into the chamber (12, 112).

4. Greenhouse according to claim 3, **characterized in that** a humidity sensor (41) is present that commands said means (32, 132) for forced input of humidity into the chamber (12, 112) to maintain the level of humidity inside the chamber within a preset interval of values.

5. Greenhouse according to claim 1, **characterized in that** the container (133) of water is positioned inside the box (14, 114) and is at least partially visible through a front transparent wall of the greenhouse.

## Patentansprüche

1. Treibhaus von kleiner Größe, bestehend aus einer Kammer (12, 112) für Pflanzen mit einem Boden, der wenigstens zum Teil aus einem Kasten (14, 114) hergestellt ist, der Geräte zur Kontrolle der Umgebungsparameter im Innern der Kammer enthält, wobei besagte Geräte Mittel zur Befeuchtung der Atmosphäre in der Kammer umfassen, **dadurch gekennzeichnet, dass** besagte Befeuchtungsmittel einen Ultraschallzerstäuber (132) umfassen, der in einem Wasserbehälter (133) eingetaucht ist, wobei ein Ventilator (153) im Oberteil besagten Behälters (133) angeordnet ist, um auf Befehl einen Überdruck in dem Behälter zu erzeugen, wobei das Oberteil mit dem Innern der Kammer (12, 112) für Pflanzen durch ein Rohr (134) verbunden ist, wobei außerdem ein Steuerungsgerät (139) in dem Treibhaus vorhanden ist, um in Intervallen und der Reihe nach den Zerstäuber (132) und besagten Überdruck erzeugenden Ventilator (153) zu aktivieren, um so einen Hauch von Dampf in der Kammer durch das Rohr (134) zu erzeugen.

2. Treibhaus gemäß Anspruch 1, **dadurch gekennzeichnet, dass** besagte Geräte zur Steuerung der Umgebungsparameter im Innern der Kammer außerdem zirkulationsforcierende Mittel (30, 130) für die Luft in der Kammer, Heizgeräte (31, 131) und Mittel zur Steuerung der Lampe (13) für die Innenbeleuchtung der Kammer umfassen.

3. Treibhaus gemäß Anspruch 1, **dadurch gekennzeichnet, dass** die Befeuchtungsmittel Mittel (32, 132) für einen forcierten Einstrom von Feuchtigkeit in die Kammer (12, 112) sind.

4. Treibhaus gemäß Anspruch 3, **dadurch gekennzeichnet, dass** ein Feuchtigkeitsfühler (41) vorhanden ist, der besagte Mittel (32, 132) für einen forcierten Einstrom von Feuchtigkeit in die Kammer (12, 112) regelt, um den Feuchtigkeitsgehalt im Innern der Kammer innerhalb eines voreingestellten Wertebereichs aufrecht zu halten.

5. Treibhaus gemäß Anspruch 1, **dadurch gekennzeichnet, dass** der Wasserbehälter (133) im Innern des Kastens (14, 114) angeordnet ist und wenigstens zum Teil durch eine transparente Vorderwand des Treibhauses sichtbar ist.

## Revendications

1. Serre de petite taille composée d'une chambre (12, 112) pour des plantes, ayant une partie inférieure qui est réalisée, au moins partiellement, avec un boîtier (14, 114) contenant des dispositifs pour contrôler les paramètres ambiants à l'intérieur de la chambre, lesdits dispositifs comprenant des moyens pour humidifier l'atmosphère dans la chambre, **caractérisée en ce que** lesdits moyens d'humidification comprennent un nébulisateur à ultrasons (132) immergé dans un récipient d'eau (133), un ventilateur (153) qui est agencé dans la partie supérieure dudit récipient (133) pour générer sur commande une surpression dans le récipient, avec la partie supérieure qui est raccordée à l'intérieur de la chambre (12, 112) pour les plantes par le biais d'un conduit (134), un dispositif de commande (139) qui est en outre présent dans la serre pour activer à intervalles et en séquence le nébuliseur (132) et ledit ventilateur (153) générant la surpression, afin de produire une bouffée de vapeur dans la chambre par le biais du conduit (134).

2. Serre selon la revendication 1, **caractérisée en ce que** lesdits dispositifs pour contrôler les paramètres ambiants à l'intérieur de la chambre comprennent en outre des moyens de circulation forcée (30, 130) de l'air dans la chambre, des moyens de chauffage (31, 131) et des moyens de commande de lampe,(13) pour éclairer l'intérieur de la chambre.

3. Serre selon la revendication 1, **caractérisée en ce que** les moyens d'humidification sont des moyens (32, 132) pour l'introduction forcée de l'humidité dans la chambre (12, 112).

4. Serre selon la revendication 3, **caractérisée en ce que** l'on trouve un capteur d'humidité (41) qui commande lesdits moyens (32, 132) pour l'introduction forcée de l'humidité dans la chambre (12, 112) pour maintenir le niveau d'humidité à l'intérieur de la chambre dans un intervalle prédéterminé de valeurs.

5. Serre selon la revendication 1, **caractérisée en ce que** le récipient (133) d'eau est positionné à l'intérieur du boîtier (14, 114) et est au moins partiellement visible à travers une paroi transparente frontale de la serre.
